# EUROPEAN PATENT SPECIFICATION

(11) **EP 3 501 964 B1**
(45) Date of publication and mention of the grant of the patent: **31.01.2024**
(21) Application number: 18209754.3
(22) Date of filing: 03.12.2018
(51) Int. Cl.: B62M 9/1242, B62M 9/121, B62M 9/126

(54) **ROCKER ARM FOR A BICYCLE GEARSHIFT**
KIPPHEBEL FÜR EINE FAHRRADGANGSCHALTUNG
BRAS CULBUTEUR DESTINÉ AU CHANGEMENT DE VITESSE D'UNE BICYCLETTE

(30) Priority: 22.12.2017 IT 201700148829
(43) Date of publication of application: 26.06.2019
(73) Proprietor: Campagnolo S.r.l., 36100 Vicenza (VI) (IT)
(72) Inventor: PASQUA, Paolo, I-36043 Camisano Vicentino (Vicenza) (IT); LAZZARIN, Leopoldo, I-36100 Vicenza (IT)
(74) Representative: Porta & Consulenti Associati S.p.A.

(56) References cited:
- CN-B- 103 121 493
- DE-U1-202012 103 919
- FR-A- 915 334
- FR-A1- 2 637 249
- US-A- 3 994 167
- US-A- 4 619 632

## Description

The present invention refers to a rocker arm for a bicycle gearshift.

Preferably, the bicycle is a racing bicycle.

In particular, the bicycle gearshift being referred to is the rear one, which moves the chain among the different sprockets of the cassette associated with the rear wheel of the bicycle allowing the gear ratio to be changed.

A rear gearshift typically comprises an articulated quadrilateral actuation linkage that is actuated mechanically by a sheathed cable (mechanically actuated rear gearshift) or electrically by an electric actuator (electrically actuated rear gearshift).

In both cases, the rear gearshift typically comprises a first body fixed to the bicycle frame, a second body that supports a rocker arm and a pair of articulation connecting rods that connect the first body and the second body.

The rocker arm comprises an inner plate, an outer plate, a pair of pins fixedly connected to the inner and outer plates and a pair of toothed wheels arranged between the inner and outer plates and rotatable about the aforementioned pins.

The inner plate is the plate that, when the rocker arm is mounted on the bicycle, faces the wheel of the bicycle, whereas the outer plate is the one that, when the rocker arm is mounted on the bicycle, is arranged on the opposite side to the wheel of the bicycle with respect to the inner plate.

When in use, the transmission chain reaches a sprocket starting from the crankset of the bicycle, winds partially on the sprocket itself and is deviated towards the upper wheel of the rocker arm. The transmission chain leaves the engagement with the sprocket, enters into the rocker arm engaging the upper wheel and winding partially on the upper wheel and is deviated towards the lower wheel of the rocker arm. The lower wheel then engages the transmission chain deviating it and directing it back towards the crankset of the bicycle.

The rocker arm is usually made rotatable about an axis substantially parallel to the rotation axis of the wheels, so as to allow the rocker arm to take up different angular positions with respect to the sprockets and thus make more or less long paths for the transmission chain, allowing a correct tensioning of the transmission chain independently from the sprocket engaged.

Examples of rocker arms summarily described above are described in documents EP3216688A1 and EP3246241A1.

The rocker arm further assists the transmission chain during upward gearshifting during which the transmission chain is transferred from a smaller sprocket to a larger sprocket.

In particular, during upward gearshifting, and mainly during the last upwards gearshifting operations (namely the upward gearshifting operations that reach the two or three sprockets having the largest diameter), a portion of the outer plate, arranged radially outside of the rotation axis of the upper wheel, tends to contact the transmission chain pushing it and accompanying it in the translation onto a larger sprocket.

Such a pushing action of the rocker arm is even more accentuated when the transmission chain is particularly inclined with respect to a longitudinal axis of the bicycle, namely when the transmission chain is engaged on the largest toothed wheels of the crankset and on the largest sprockets of the cassette.

The Applicant has noted that such a pushing action, although very efficient and thus sought after in the design step of the rocker arm, is the source of sliding of the transmission chain on the outer plate of the rocker arm and the cause of greater wearing of the transmission chain, of noise and, ultimately, of friction that penalize the performance of the cyclist.

The Applicant has perceived that it would be advantageous to be able to decrease the friction between transmission chain and rocker arm without however giving up the pushing action offered by the outer plate during upward gearshifting and particularly during the last upward gearshifting operations.

The Applicant has noted that the pushing action of the outer plate of the rocker arm on the transmission chain does not have the same efficiency along the entire circumferential extension of the radially outer portion with respect to the rotation axis of the upper wheel.

The Applicant has perceived that the pushing action is maximum and most effective on the radially outer portion with respect to the rotation axis of the upper wheel close to the inlet of the transmission chain in the rocker arm, whereas the remaining portion of radially outer plate with respect to the rotation axis of the upper wheel does not contribute decisively to such pushing action. The document FR2637249 discloses a rocker arm in accordance with the preamble of claim 1.

The present invention therefore relates to a rocker arm for a bicycle gearshift according to claim 1.

The Applicant has noted that in this way, only the active surface of the radially outer portion of the outer plate acts on the transmission chain, whereas the auxiliary portion does not contact the transmission chain and does not create friction.

The active surface thus makes it possible to facilitate upward gearshifting, in particular the last upward gearshifting operations, contacting the transmission chain and accompanying it towards a sprocket having a larger diameter.

The auxiliary surface, being radially more outer with respect to the active surface, does not contact the transmission chain avoiding further unnecessary sliding of the latter on the rocker arm.

The first rotation axis of the upper wheel is taken as reference for the elements that form part of the rocker arm of the present invention; the indications of direction and similar, such as "axial", "radial", "circumferential", will be made with respect to this axis. The indications "outwards" and "inwards" referring to radial directions must be understood as away from the first axis or towards the first axis. The axial direction is parallel to the direction of the first axis and the indications "inwards" and "outwards" referring to axial directions must be understood respectively as away from the outer plate towards the inner plate and as away from the outer plate on the opposite side with respect to the inner plate. The circumferential direction is understood as an ached, and not necessarily perfectly circular, direction about the first axis.

According to the invention, a first plane is defined by a plane containing the first and the second rotation axis and a second plane is defined by a plane containing the first rotation axis and inclined by an angle, measured along a first circumferential direction from the active surface towards the auxiliary surface, comprised between 20° and 60° with respect to the first plane; said auxiliary surface being arranged circumferentially beyond said second plane with respect to a first circumferential direction.

In other words, the auxiliary surface is arranged, along a first circumferential direction directed from the active surface towards the auxiliary surface, after the projection of the line of the second reference plane on the outer plate.

According to the invention, said active surface is arranged circumferentially beyond said second plane with respect to a second circumferential direction opposite to the first circumferential direction.

In other words, the active surface is arranged, along a second circumferential direction directed from the auxiliary surface towards the active surface, after the projection of the line of the second reference plane on the outer plate.

Preferably, said active surface projects axially more internally with respect to said auxiliary surface by an amount comprised between 0.05 millimeters and 3 millimeters.

The Applicant has perceived that such amounts can be sufficient to ensure that the active surface intercepts and accompanies the transmission chain during upward gearshifting avoiding sliding of the distribution chain on the auxiliary surface.

According to the invention, said active surface has a greater extension in the radial direction than the extension in the radial direction of the auxiliary surface.

The Applicant has noted that in this way the intervention of the active surface is substantially always ensured during upward gearshifting and in particular during the last upward gearshifting operations.

The Applicant has further perceived that in this way it is possible to arrange the active surface not completely flat, namely not all at the same axial distance from the inner plate, but with one or more portions axially more inner and active on the transmission chain.

This makes it possible to further reduce the surface of the outer plate that actually intercepts the transmission chain, further reducing undesired sliding.

Preferably, a joining area is provided arranged between the active surface and the auxiliary surface.

The joining area allows greater flexibility of design in the transition between the active surface and the auxiliary surface.

Preferably, said joining area is crossed by said second plane.

Preferably, in some embodiments said radially outer portion of the outer plate comprises a step to axially distance the active surface from the auxiliary surface.

The step defines a section of discontinuity in the extension of the radially outer portion, positioning the active surface and the auxiliary surface at different axial distances.

Preferably, in some embodiments said step is provided at said joining area.

Preferably, in some embodiments said radially outer portion of the outer plate comprises a further step provided at said active surface.

In this way, the active surface has a section of discontinuity that places the portions of active surface at different axial distances separated by the further step.

Preferably, in some embodiments said radially outer portion of the outer plate has a circumferential extension without surface discontinuity.

In these embodiments the aforementioned steps are not provided and the axial distance of the active surface and of the auxiliary surface from the first plate changes with substantial continuity.

Preferably, in some embodiments said active surface is made by a first portion circumferentially adjacent to a second portion; said second portion being axially more internal with respect to said first portion.

In these embodiments, the active surface decreases its axial distance from the inner plate along the first circumferential direction, reaching a point or an area at minimum axial distance from the inner plate at the joining area or before the joining area.

Preferably, in other embodiments, said first portion is axially more internal with respect to said second portion.

In these other embodiments, the active surface increases its axial distance from the inner plate along the first circumferential direction, reaching a point or an area at maximum axial distance from the inner plate at the joining area or before the joining area.

Preferably, said second portion of the active surface is circumferentially closer to said second plane with respect to said first portion.

Preferably, said inner and outer plates are made of aluminum alloy or carbon fiber or technopolymer.

Further features and advantages of the present invention will become clearer from the following detailed description of preferred embodiments thereof, made with reference to the attached drawings and given for indicating and not limiting purposes. In such drawings:
- figure 1 is a front view of a rocker arm according to the present invention;
- figure 2 is a front view of a detail of the rocker arm of figure 1;
- figure 3 is a top view of the rocker arm of figure 1;
- figure 4 is a top view of a first variant embodiment of the rocker arm of figure 1;
- figure 5 is a top view of a second variant embodiment of the rocker arm of figure 1;
- figure 6 is a top view of a third variant embodiment of the rocker arm of figure 1; and
- figure 7 is a top view of a fourth variant embodiment of the rocker arm of figure 1.

With reference to the attached figures, a rocker arm for a bicycle gearshift in accordance with the present invention is wholly indicated with reference numeral 10.

The bicycle gearshift (not illustrated) of which the rocker arm 10 is part, is the rear gearshift, namely the gearshift that acts on the cassette of a rear wheel of the bicycle.

As an example, the rear gearshift can comprise a first body fixed to the bicycle frame, a second body that rotatably supports the rocker arm 10 and a pair of articulation connecting rods that connect the first body and the second body.

The rocker arm 10 comprises an inner plate 11 and an outer plate 12 that extends substantially parallel to the inner plate 11. The inner plate 11 and the outer plate 12 are made of aluminum alloy or carbon fiber or technopolymer.

The inner plate 11 is the plate that, when the gearshift is in use, is closest to the rear wheel of the bicycle.

An upper wheel 13 and a lower wheel 14 are arranged between the inner plate 11 and the outer plate 12 and are rotatable with respect to the latter about, respectively, a first rotation axis X1 and a second rotation axis X2. The first X1 and the second rotation axis X2 are parallel to one another.

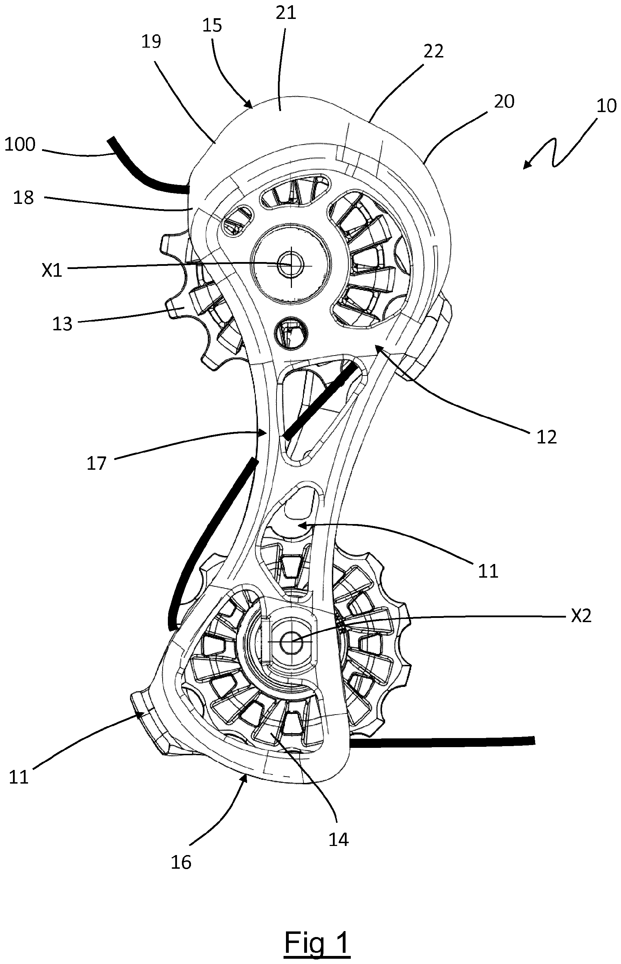

Figure 1 schematically represents a transmission chain 100 that engages the rocker arm 10 during use. As can be seen, the chain 100 enters between the inner plate 11 and the outer plate 12 at the upper wheel 13, engages and partially wraps around the upper wheel 13 and is deviated towards the lower wheel 14. When the transmission chain 100 reaches the lower wheel 14, the transmission chain 100 engages and partially wraps around the lower wheel 14 and comes out from the rocker arm 10 directed towards the front crankset of the bicycle.

The outer plate 12 comprises a radially outer portion 15 with respect to the first rotation axis X1 and a radially outer portion 16 with respect to the second rotation axis X2. The radially outer portion 15 with respect to the first rotation axis X1 is connected to the radially outer portion 16 with respect to the second rotation axis X2 by a central portion 17 of the outer plate 12.

The radially outer portion 15 with respect to the first rotation axis X1 extends from an inlet section 18 for the transmission chain 100 in the rocker arm 10 and extends circumferentially along an arc comprised between 130° and 180°, preferably about 160°, around the upper wheel 13. In other words, the radially outer portion 15 has an arched extension that follows, for an angle comprised between 130° and 180°, preferably about 160°, the extension of the upper wheel 13.

The radially outer portion 15 comprises an active surface 19 and an auxiliary surface 20.

The active surface 19 faces in the axially inner direction (namely towards the inner plate 11) and has the function of intercepting the transmission chain 100 and accompanying it during upward gearshifting, in particular during the last upward gearshifting operations.

The active surface 19 extends from the inlet section 18 of the radially outer portion 15.

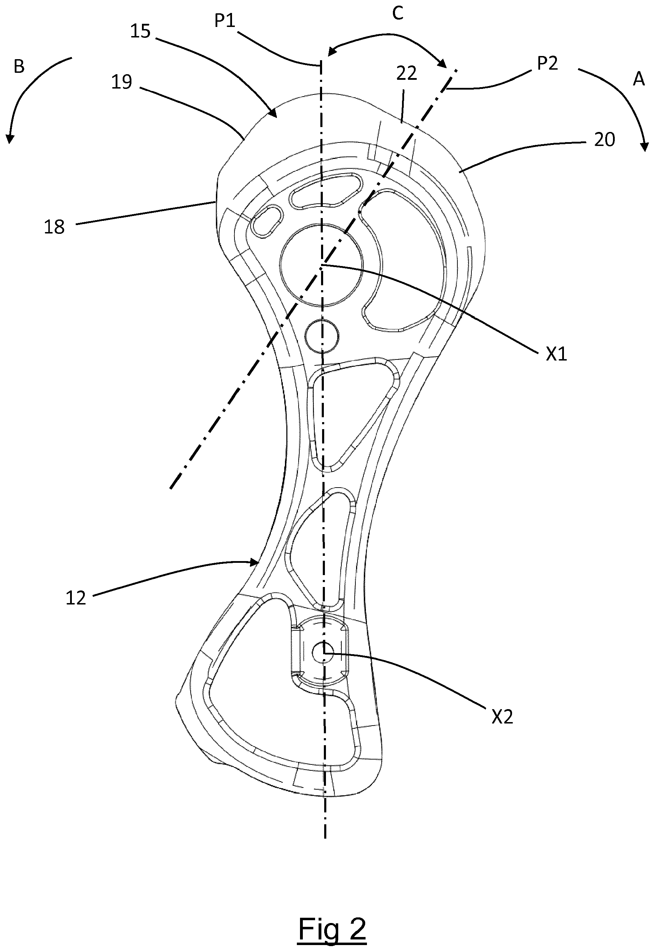

As represented in figures 1 and 2, the active surface 19 has a radial lobe 21 that projects radially outwards.

The auxiliary surface 20 is circumferentially after the active surface 19 and has the purpose of containing the transmission chain 100 on the upper wheel 13 preventing it from accidentally disengaging from the latter.

As illustrated in figure 2, the first rotation axis X1 and the second rotation axis X2 are contained in a first reference plane P1. A second reference plane P2 is defined by a plane that contains the first rotation axis X1 and that forms an angle C comprised between 20° and 60°, preferably comprised between 30° and 45°, even more preferably about 35°, with the first reference plane P1. Such an angle C is measured from the first reference plane P1 towards the second reference plane P2 along a first circumferential direction A. The first circumferential direction A is directed from the active surface 19 towards the auxiliary surface 20.

The auxiliary surface 20 is arranged circumferentially beyond, with respect to the first circumferential direction A, the second reference plane P2, as illustrated in figure 2.

The active surface 19 is arranged circumferentially beyond the second reference plane P2 with respect to a second circumferential direction B opposite to the first circumferential direction A.

The first reference plane P1 passes through the active surface 19, as illustrated in figure 2.

The circumferential extension of the active surface 19 along the first circumferential direction A is greater than about 45° and less than about 110°, preferably it is greater than about 60° and less than about 100°, even more preferably it is about 80°.

The circumferential extension of the auxiliary surface 20 along the first circumferential direction A is greater than about 30° and less than about 90°, preferably it is greater than about 40° and less than about 60°, even more preferably it is about 50°.

Between the active surface 19 and the auxiliary surface 20 a joining area 22 is provided which, along the first circumferential direction A, starts at the end of the active surface 19 and ends at the start of the auxiliary surface 20.

The function of the joining area 22 is to join together the active surface 19 and the auxiliary surface 20.

The circumferential extension of the joining area 22 along the first circumferential direction A is greater than about 5° and less than about 40°, preferably it is greater than about 10° and less than about 25°, even more preferably it is about 15°.

As represented in figure 2, the second reference plane P2 passes through the joining area 22.

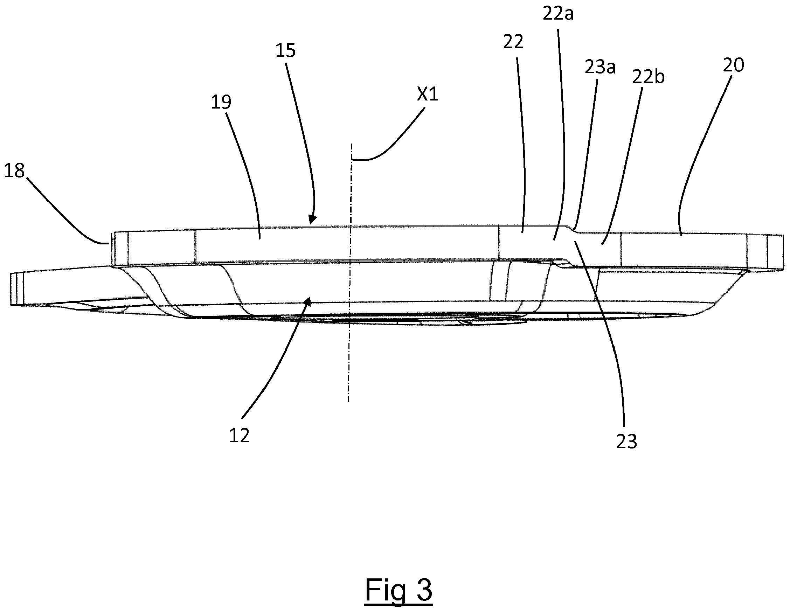

As better represented in figures 3 to 7, the active surface 19 projects axially more internally with respect to the auxiliary surface 20. In other words, the active surface 19 comprises at least one area that is arranged axially more internally (namely closer to the inner plate 11) with respect to any area of the auxiliary surface 20.

In particular, the active surface 19 projects axially more internally with respect to the auxiliary surface 20 by an amount comprised between 0.05 millimeters and 3 millimeters, preferably between 0.1 and 2 millimeters, more in particular by about 0.5 millimeters.

The active surface 19 is thus capable of accompanying the transmission chain 100 in upward gearshifting avoiding contact of the auxiliary surface 20 with the transmission chain 100.

With particular reference to figures 3, 5, and 6, on the outer plate 12 a step 23 is provided which makes the outer plate 12 discontinuous and axially spaces the active surface 19 from the auxiliary surface 20. The step 23 extends radially for the entire radial extension of the radially outer portion 15 of the outer plate 12. The step 23 acts in the axial direction, namely it comprises a central portion 23a that deviates the profile of the outer plate 12 in the axial direction.

The step 23 is formed on the joining area 22, so that a first portion 22a of the joining area 22 is substantially axially aligned with the active surface 19 and so that a second portion 22b of the joining area 22 is substantially axially aligned with the auxiliary surface 20.

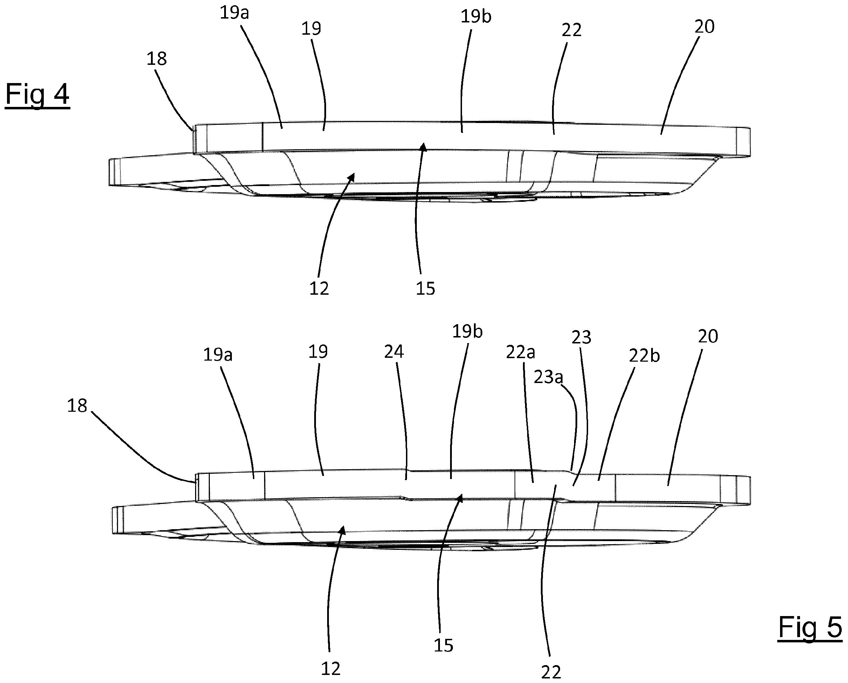

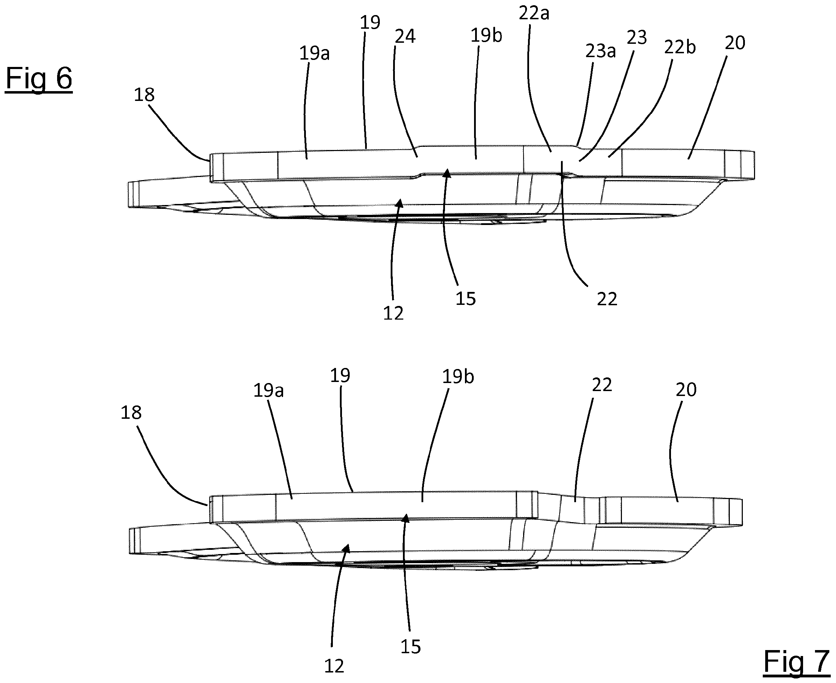

In the embodiments illustrated in figures 5 and 6, the outer plate 12 comprises a further step 24. Such a further step 24 is formed on the active surface 19, so as to configure the active surface 19 along two surfaces axially misaligned with each other.

In particular, in the embodiment illustrated in figure 5, the active surface 19 has a first portion 19a axially more inner than a second portion 19b circumferentially adjacent to the first portion 19a. The second portion 19b of the active surface 19 is arranged circumferentially closer to the second reference plane P2, whereas the first portion 19a is distal from the second reference plane P2.

In this embodiment, the radially outer portion 15 moves axially away in a discreet manner (namely in predetermined areas) from the inner plate 11.

In the embodiment illustrated in figure 6, the first portion 19a of the active surface 19 is axially more outer than the second portion 19b.

In this embodiment, the radially outer portion 15 moves axially closer in a discreet manner to the inner plate 11.

In the embodiment of figure 4, the radially outer portion 15 of the outer plate 12 has a circumferential extension without surface discontinuity, namely it does not have any step.

In this embodiment, the active surface 19 decreases its axial distance from the inner plate 11 with continuity (along the first circumferential direction A) until a minimum axial distance from the inner plate 11 is reached at the joining area 22 or before the joining area 22. In the case in which the minimum axial distance from the inner plate 11 is not reached at the joining area 2 but before it, the active surface 19 increases its axial distance from the inner plate 11 with continuity reaching the joining area 22. The radially outer portion 15 thus continues to increase its axial distance from the inner plate 11 with continuity also at the auxiliary surface 20.

Also in the embodiment illustrated in figure 7, the radially outer portion 15 of the outer plate 12 does not have any step.

In this embodiment, the active surface 19 decreases its axial distance from the inner plate 11 with continuity (along the first circumferential direction A) until a minimum axial distance from the inner plate 11 is reached at the joining area 22 or before the joining area 22. In the case in which the minimum axial distance from the inner plate 11 is not reached at the joining area 2 but before it, the active surface 19 increases its axial distance from the inner plate 11 with continuity reaching the joining area 22.

In this embodiment, the joining area 22 has a recess 25 in the radially inner direction. The radially outer portion 15, however, continues to increase its axial distance from the inner plate 11 with continuity at the recess 25 and, thereafter, at the auxiliary surface 20.

In all of the illustrated embodiments, the radially outer portion 15 is not flat but arched with a very high radius of curvature that is not necessarily constant.

Therefore, also in the embodiments that foresee one or more steps, the active surface 19, the joining area 22 and the auxiliary surface 20 are not flat but are arched with very high radii of curvature, not necessarily constant and not necessarily equal to one another.

## Claims

1. Rocker arm (10) for a bicycle gearshift, comprising:
an inner plate (11) and an outer plate (12);
an upper wheel (13) and a lower wheel (14) arranged between the inner plate (11) and the outer plate (12) and configured to engage a transmission chain (100), said upper wheel (13) being rotatable about a first rotation axis (X1) and said lower wheel (14) being rotatable about a second rotation axis (X2);
said outer plate (12) comprising a radially outer portion (15) with respect to said first rotation axis (X1) provided with an active surface (19) and with an auxiliary surface (20);
wherein said auxiliary surface (20) is circumferentially after said active surface (19) and wherein said active surface (19) projects axially more internally with respect to said auxiliary surface (20);
wherein a first reference plane (P1) contains the first (X1) and the second rotation axis (X2) and a second reference plane (P2) contains the first rotation axis (X1) and is inclined by an angle (C), measured along a first circumferential direction (A) from the active surface (19) towards the auxiliary surface (20), comprised between 20° and 60° with respect to the first reference plane (P1); the rocker arm **characterised in that** said auxiliary surface (20) being arranged circumferentially beyond said second reference plane (P2) with respect to said first circumferential direction (A);
wherein said active surface (19) is arranged circumferentially beyond said second reference plane (P2) with respect to a second circumferential direction (B) opposite to the first circumferential direction (A) and wherein said active surface (19) has a greater extension in the radial direction than the extension in the radial direction of the auxiliary surface (20).

2. Rocker arm (10) according to claim 1, wherein said active surface (19) projects axially more internally with respect to said auxiliary surface (20) by an amount comprised between 0.05 millimeters and 3 millimeters.

3. Rocker arm (10) according to any one of the previous claims, comprising an active joining area (22) between the active surface (19) and the auxiliary surface (20).

4. Rocker arm (10) according to claim 3, wherein said active joining area (22) is crossed by said second reference plane (P2).

5. Rocker arm (10) according to any one of the previous claims, wherein said radially outer portion (15) of the outer plate (12) comprises a step (23) to axially space the active surface (19) from the auxiliary surface (20).

6. Rocker arm (10) according to claim 4 and 5 wherein said step (23) is provided at said active joining area (22).

7. Rocker arm (10) according to claim 6, wherein said radially outer portion (15) of the outer plate (12) comprises a further step (24) provided at said active surface (19).

8. Rocker arm (10) according to any one of claims 1 to 4, wherein said radially outer portion (15) of the outer plate (12) has a circumferential extension without surface discontinuity.

9. Rocker arm (10) according to any one of the previous claims, wherein said active surface (19) is made from a first portion (19a) circumferentially adjacent to a second portion (19b); said second portion (19b) being axially more internal with respect to said first portion (19a).

10. Rocker arm (10) according to any one of claims 1 to 8, wherein said active surface (19) is made from a first portion (19a) circumferentially adjacent to a second portion (19b); said first portion (19a) being axially more internal with respect to said second portion (19b).

11. Rocker arm (10) according to claim 9 or 10, wherein said second portion (19b) of the active surface (19) is circumferentially closer to said second reference plane (P2) with respect to said first portion (19a).

12. Rocker arm (10) according to any one of the previous claims, wherein said inner (11) and outer (12) plates are made of aluminum alloy or carbon fiber or technopolymer.

## Patentansprüche

1. Kipphebel (10) für eine Fahrradgangschaltung, umfassend:
eine innere Platte (11) und eine äußere Platte (12);
ein oberes Rad (13) und ein unteres Rad (14), die zwischen der inneren Platte (11) und der äußeren Platte (12) angeordnet und dazu konfiguriert sind, in eine Übertragungskette (100) einzugreifen, wobei das obere Rad (13) um eine erste Drehachse (X1) drehbar ist und das untere Rad (14) um eine zweite Drehachse (X2) drehbar ist;
wobei die äußere Platte (12) einen radial äußeren Abschnitt(15) in Bezug auf die erste Drehachse (X1) umfasst, der mit einer aktiven Fläche (19) und einer Hilfsfläche (20) versehen ist;
wobei die Hilfsfläche (20) in Umfangsrichtung hinter der aktiven Fläche (19) liegt und wobei die aktive Fläche (19) in Bezug auf die Hilfsfläche (20) axial weiter nach innen vorsteht;
wobei eine erste Bezugsebene (P1) die erste (X1) und die zweite Drehachse (X2) enthält und eine zweite Bezugsebene (P2) die erste Drehachse (X1) enthält und um einen Winkel (C) geneigt ist, gemessen entlang einer ersten Umfangsrichtung (A) von der aktiven Fläche (19) zur Hilfsfläche (20), der zwischen 20° und 60° in Bezug auf die erste Bezugsebene (PI) liegt; wobei der Kipphebel **dadurch gekennzeichnet ist, dass** die Hilfsfläche (20) in Bezug auf die erste Umfangsrichtung (A) in Umfangsrichtung jenseits der zweiten Bezugsebene (P2) angeordnet ist;
wobei die aktive Fläche (19) in Umfangsrichtung jenseits der zweiten Bezugsebene (P2) in Bezug auf eine zweite Umfangsrichtung (B) angeordnet ist, die der ersten Umfangsrichtung (A) entgegengesetzt ist, und wobei die aktive Fläche (19) eine größere Erstreckung in radialer Richtung als die Erstreckung in radialer Richtung der Hilfsfläche (20) aufweist.

2. Kipphebel (10) nach Anspruch 1, wobei die aktive Fläche (19) in Bezug auf die Hilfsfläche (20) um einen Betrag zwischen 0,05 Millimetern und 3 Millimetern axial weiter nach innen ragt.

3. Kipphebel (10) nach einem der vorhergehenden Ansprüche, mit einem aktiven Verbindungsbereich (22) zwischen der aktiven Fläche (19) und der Hilfsfläche (20).

4. Kipphebel (10) nach Anspruch 3, wobei die aktive Verbindungsfläche (22) von der zweiten Bezugsebene (P2) gekreuzt wird.

5. Kipphebel (10) nach einem der vorhergehenden Ansprüche, wobei der radial äußere Abschnitt (15) der äußeren Platte (12) eine Stufe (23) aufweist, um die aktive Fläche (19) von der Hilfsfläche (20) axial zu beabstanden.

6. Kipphebel (10) nach Anspruch 4 und 5, wobei die Stufe (23) an dem aktiven Verbindungsbereich (22) vorgesehen ist.

7. Kipphebel (10) nach Anspruch 6, wobei der radial äußere Abschnitt (15) der äußeren Platte (12) eine weitere Stufe (24) umfasst, die an der aktiven Fläche (19) vorgesehen ist.

8. Kipphebel (10) nach einem der Ansprüche 1 bis 4, wobei der radial äußere Abschnitt (15) der äußeren Platte (12) eine Umfangserstreckung ohne Oberflächendiskontinuität aufweist.

9. Kipphebel (10) nach einem der vorhergehenden Ansprüche, wobei die aktive Fläche (19) aus einem ersten Abschnitt (19a) besteht, der in Umfangsrichtung an einen zweiten Abschnitt (19b) angrenzt, wobei der zweite Abschnitt (19b) in Bezug auf den ersten Abschnitt (19a) axial weiter innen angeordnet ist.

10. Kipphebel (10) nach einem der Ansprüche 1 bis 8,
wobei die aktive Fläche (19) aus einem ersten Abschnitt (19a) besteht, der in Umfangsrichtung an einen zweiten Abschnitt (19b) angrenzt, wobei der erste Abschnitt (19a) in Bezug auf den zweiten Abschnitt (19b) axial weiter innen liegt.

11. Kipphebel (10) nach Anspruch 9 oder 10, wobei der zweite Abschnitt (19b) der aktiven Fläche (19) in Bezug auf den ersten Abschnitt (19a) in Umfangsrichtung näher an der zweiten Bezugsebene (P2) liegt.

12. Kipphebel (10) nach einem der vorhergehenden Ansprüche, wobei die innere (11) und die äußere (12) Platte aus einer Aluminiumlegierung oder aus Kohlefaser oder Technopolymer hergestellt sind.

## Revendications

1. Bras culbuteur (10) pour un changement de vitesse de bicyclette, comprenant :
une plaque interne (11) et une plaque externe (12) ; et
une roue supérieure (13) et une roue inférieure (14) qui sont agencées entre la plaque interne (11) et la plaque externe (12) et qui sont configurées pour engager une chaîne de transmission (100), ladite roue supérieure (13) pouvant être entraînée en rotation autour d'un premier axe de rotation (X1) et ladite roue inférieure (14) pouvant être entraînée en rotation autour d'un second axe de rotation (X2) ;
ladite plaque externe (12) comprenant une partie radialement externe (15) par rapport audit premier axe de rotation (X1) qui est munie d'une surface active (19) et d'une surface auxiliaire (20) ;
dans lequel ladite surface auxiliaire (20) est de façon circonférentielle après ladite surface active (19) et dans lequel ladite surface active (19) fait saillie axialement de façon davantage interne par rapport à ladite surface auxiliaire (20) ;
dans lequel un premier plan de référence (P1) contient les premier (X1) et second (X2) axes de rotation et un second plan de référence (P2) contient le premier axe de rotation (X1) et est incliné d'un angle (C), mesuré suivant une première direction circonférentielle (A) depuis la surface active (19) en direction de la surface auxiliaire (20), qui est compris entre 20° et 60° par rapport au premier plan de référence (P1) ;
le bras culbuteur étant **caractérisé en ce que** ladite surface auxiliaire (20) est agencée de façon circonférentielle au-delà dudit second plan de référence (P2) par rapport à ladite première direction circonférentielle (A) ; et
dans lequel ladite surface active (19) est agencée de façon circonférentielle au-delà dudit second plan de référence (P2) par rapport à une seconde direction circonférentielle (B) qui est opposée à la première direction circonférentielle (A) et dans lequel ladite surface active (19) présente une extension plus importante dans la direction radiale que l'extension dans la direction radiale de la surface auxiliaire (20).

2. Bras culbuteur (10) selon la revendication 1, dans lequel ladite surface active (19) fait saillie axialement de façon davantage interne par rapport à ladite surface auxiliaire (20) selon une valeur comprise entre 0,05 millimètre et 3 millimètres.

3. Bras culbuteur (10) selon l'une quelconque des revendications précédentes, comprenant une zone de jonction active (22) entre la surface active (19) et la surface auxiliaire (20).

4. Bras culbuteur (10) selon la revendication 3, dans lequel ladite zone de jonction active (22) est croisée par ledit second plan de référence (P2).

5. Bras culbuteur (10) selon l'une quelconque des revendications précédentes, dans lequel ladite partie radialement externe (15) de la plaque externe (12) comprend une marche (23) afin d'espacer axialement la surface active (19) vis-à-vis de la surface auxiliaire (20).

6. Bras culbuteur (10) selon les revendications 4 et 5, dans lequel ladite marche (23) est prévue au niveau de ladite zone de jonction active (22).

7. Bras culbuteur (10) selon la revendication 6, dans lequel ladite partie radialement externe (15) de la plaque externe (12) comprend une autre marche (24) qui est prévue au niveau de ladite surface active (19).

8. Bras culbuteur (10) selon l'une quelconque des revendications 1 à 4, dans lequel ladite partie radialement externe (15) de la plaque externe (12) présente une extension circonférentielle sans discontinuité de surface.

9. Bras culbuteur (10) selon l'une quelconque des revendications précédentes, dans lequel ladite surface active (19) est réalisée à partir d'une première partie (19a) qui est adjacente de façon circonférentielle à une seconde partie (19b) ; ladite seconde partie (19b) étant axialement davantage interne par rapport à ladite première partie (19a).

10. Bras culbuteur (10) selon l'une quelconque des revendications 1 à 8, dans lequel ladite surface active (19) est réalisée à partir d'une première partie (19a) qui est adjacente de façon circonférentielle à une seconde partie (19b) ; ladite première partie (19a) étant axialement davantage interne par rapport à ladite seconde partie (19b).

11. Bras culbuteur (10) selon la revendication 9 ou 10, dans lequel ladite seconde partie (19b) de la surface active (19) est plus proche de façon circonférentielle dudit second plan de référence (P2) par rapport à ladite première partie (19a).

12. Bras culbuteur (10) selon l'une quelconque des revendications précédentes, dans lequel lesdites plaques interne (11) et externe (12) sont réalisées à partir d'un alliage d'aluminium ou d'une fibre de carbone ou d'un techno-polymère.
